(19) Europäisches Patentamt / European Patent Office / Office européen des brevets

(11) **EP 3 782 264 B1**

(12) **FASCICULE DE BREVET EUROPEEN**

(45) Date de publication et mention
de la délivrance du brevet:
**28.12.2022 Bulletin 2022/52**

(21) Numéro de dépôt: **19715945.2**

(22) Date de dépôt: **11.04.2019**

(51) Classification Internationale des Brevets (IPC):
*H02K 1/18* *(2006.01)*    *H02K 5/24* *(2006.01)*
*H02K 5/10* *(2006.01)*

(52) Classification Coopérative des Brevets (CPC):
**H02K 5/24; H02K 1/185;** H02K 5/10

(86) Numéro de dépôt international:
**PCT/EP2019/059247**

(87) Numéro de publication internationale:
**WO 2019/201736 (24.10.2019 Gazette 2019/43)**

(54) **ENSEMBLE STATORIQUE**

STATORANORDNUNG

STATOR ASSEMBLY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.04.2018 FR 1853521**

(43) Date de publication de la demande:
**24.02.2021 Bulletin 2021/08**

(73) Titulaires:
• **Renault s.a.s**
**92100 Boulogne Billancourt (FR)**
• **NISSAN MOTOR CO., LTD.**
**Yokohama-shi, Kanagawa 221-0023 (JP)**

(72) Inventeurs:
• **DUMAS, Eric**
**78800 HOUILLES (FR)**
• **PARIS, François**
**76920 Amfreville la mivoie (FR)**
• **KALOS, Thomas**
**91490 MILLY LA FORET (FR)**
• **MOTTE, Emmanuel**
**76150 Saint Jean du cardonnay (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A1- 1 988 621      DE-A1-102009 000 010
JP-A- 2007 306 751      JP-U- S 649 435
US-A1- 2014 197 705**

**Description**

La présente invention concerne le domaine des ensembles statoriques destinés à équiper une machine électrique, et plus particulièrement des ensembles statoriques destinés à équiper une machine électrique de traction d'un véhicule automobile à propulsion électrique ou hybride électrique.

Les machines électriques, typiquement destinées à équiper un groupe motopropulseur de véhicule automobile à propulsion électrique ou hybride électrique, comprennent un stator encastré dans un boîtier.

En étant encastré de la sorte, le stator est en porte-à-faux dans le boîtier. Il en résulte l'apparition de modes propres très énergétiques à basse fréquence. Dans le cas d'une machine électrique de traction d'un véhicule automobile, il apparaît typiquement un mode de torsion du stator vers 650 Hz autour de l'axe de la machine électrique. Le couple délivré par la machine électrique contient un certain nombre d'harmoniques qui excitent fortement ces modes et provoquent des vibrations importantes. Cela nuit à la fiabilité vibratoire et acoustique de l'ensemble statorique, c'est-à-dire que la tenue mécanique de l'ensemble est menacée lors du fonctionnement sous ses modes propres et que les vibrations occasionnées génèrent un bruit acoustique inconfortable pour les occupants du véhicule. Ainsi, il existe un besoin de fournir une liaison d'encastrement entre le boîtier et le stator présentant une moindre souplesse en torsion.

Le document JPS649435 divulgue un stator fixé en porte-à-faux dans un boîtier statorique, grâce à des tiges filetées. Un joint annulaire de centrage permet de faciliter l'assemblage du stator et de limiter les vibrations inhérentes à un mauvais centrage et à une dispersion de vissage des tiges filetées, mais ne permet pas de limiter les vibrations dues aux modes de torsion propres au stator.

Les documents JP 2007-306751 A, JP 64-009435 U et DE 10 2009 000 010 A décrivent des ensemble statorique de machine électrique comprenant un boîtier en deux portions (l'une étant en forme de pot, l'autre est un couvercle), un corps de stator étant fixé dans la première portion de boîtier, et un deuxième moyen de fixation fixe les deux portions de boîtier ensemble avec une partie du joint intercalé entre lesdits deux portions de boîtier et un autre partie du joint intercalé entre le corps de stator et le premier moyen de fixation.

Au vu de ce qui précède, l'invention a pour but de proposer un ensemble statorique palliant les inconvénients précités.

Plus particulièrement, l'invention a pour but d'augmenter la raideur de la liaison d'encastrement entre le stator et le boîtier afin d'améliorer la fiabilité vibratoire et acoustique de l'ensemble statorique.

A cet effet, il est proposé un ensemble statorique pour machine électrique comprenant une première portion de boîtier, une seconde portion de boîtier, un corps de stator inséré dans au moins la première portion de boîtier, un moyen de liaison pour lier en rotation le corps de stator avec la première portion de boîtier, un premier moyen de fixation du corps de stator à la première portion de boîtier et un deuxième moyen de fixation pour fixer les portions de boîtier l'une par rapport à l'autre.

De plus, cet ensemble comprend un joint annulaire axialement intercalé d'une part entre le corps de stator et le premier moyen de fixation et d'autre part entre lesdites portions de boîtier.

L'incorporation d'un tel joint annulaire permet, au moyen d'une seule pièce, de mettre en œuvre une étanchéité entre l'intérieur et l'extérieur du boîtier et d'augmenter la raideur de la liaison d'encastrement entre le stator et le boîtier. S'agissant de l'augmentation de la raideur, le joint annulaire ainsi disposé travaille à plat et dispose d'une très grande raideur dans son plan. On améliore ainsi la fiabilité vibratoire et acoustique de l'ensemble statorique.

Selon un mode de réalisation particulier, le joint annulaire comprend une partie radiale interne axialement intercalée entre le corps de stator et le premier moyen de fixation, et une partie radiale externe axialement intercalée entre les portions de boîtier.

Le joint annulaire ainsi disposé est solidement maintenu par rapport au boîtier. De ce fait, il participe encore davantage à la raideur de la liaison d'encastrement entre le stator et le boîtier.

Avantageusement, la partie radiale interne admet un plan de symétrie perpendiculaire à la direction axiale, la partie radiale externe admettant un plan de symétrie perpendiculaire à la direction axiale, le décalage axial entre le plan de symétrie de la partie radiale interne et le plan de symétrie de la partie radiale externe étant inférieur à 3 mm et ledit joint annulaire est au moins partiellement réalisé en tôle d'acier à haute limite élastique.

Une telle limitation du décalage axial permet de rapprocher le plan d'appui du joint annulaire sur le stator du plan d'appui du joint annulaire sur les portions de boîtier. On maximise ainsi la participation du joint annulaire à l'augmentation de la raideur de la liaison d'encastrement.

Avantageusement, la partie radiale interne et/ou la partie radiale externe a une épaisseur axiale comprise entre 0,25 mm et 0,8 mm.

Dans un mode de réalisation, la première portion de boîtier comprend une cavité cylindrique, le corps de stator étant inséré dans la cavité cylindrique, le moyen de liaison comprenant une nervure rectiligne axiale dépassant radialement vers l'extérieur depuis le corps du stator, et une rainure rectiligne axiale pratiquée dans la première portion de boîtier et s'étendant radialement vers l'extérieur depuis la cavité cylindrique, la nervure étant logée dans la rainure.

Avantageusement, l'ensemble comprend un premier orifice axial débouchant pratiqué dans le joint annulaire, un deuxième orifice axial débouchant pratiqué dans la nervure et un troisième orifice axial pratiqué dans la première portion de boîtier dans le prolongement axial de la rainure, le troisième orifice comprenant un taraudage, l'ensemble comprenant une broche filetée traversant le premier orifice, le deuxième orifice et coopérant avec le taraudage du troisième orifice.

L'utilisation d'une broche filetée traversant le premier orifice, le deuxième orifice et coopérant avec le taraudage du troisième orifice permet de mettre en œuvre une fixation solide du joint annulaire, du stator et de la première portion de boîtier.

On peut en outre prévoir une rondelle associée à la broche, la broche comprenant une tête, la rondelle étant axialement intercalée entre le corps de stator et la tête.

Une telle rondelle augmente la résistance à la compression et à la torsion lors du serrage de la broche.

De préférence, le deuxième moyen de fixation comprend un premier perçage axial débouchant pratiqué dans la seconde portion de boîtier, un second perçage axial pratiqué dans la première portion de boîtier et une vis, le second perçage comprenant un taraudage, la vis traversant le premier perçage et coopérant avec le taraudage du second perçage.

L'utilisation d'une vis traversant le premier perçage et coopérant avec le taraudage du second perçage permet une fixation solide des portions de boîtier.

Le joint peut être réalisé en tôle d'acier participe de manière importante à la raideur de la liaison d'encastrement entre le stator et le boîtier, et ce tout particulièrement avec une tôle d'acier à haute limite élastique.

La faible épaisseur du joint permet de rattraper les tolérances géométriques des pièces constituant l'ensemble statorique en limitant les contraintes générées.

Selon un autre aspect, il est proposé une machine électrique pour véhicule automobile comprenant un ensemble statorique tel que défini précédemment.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est une vue radiale d'un ensemble statorique selon un premier mode de réalisation de l'invention,
- la figure 2 est une vue en coupe axiale de l'ensemble de la figure 1,
- la figure 3 est une vue éclatée en perspective des éléments constituant l'ensemble des figures 1 et 2, et
- la figure 4 est une vue en coupe axiale d'un ensemble selon un second mode de réalisation de l'invention.

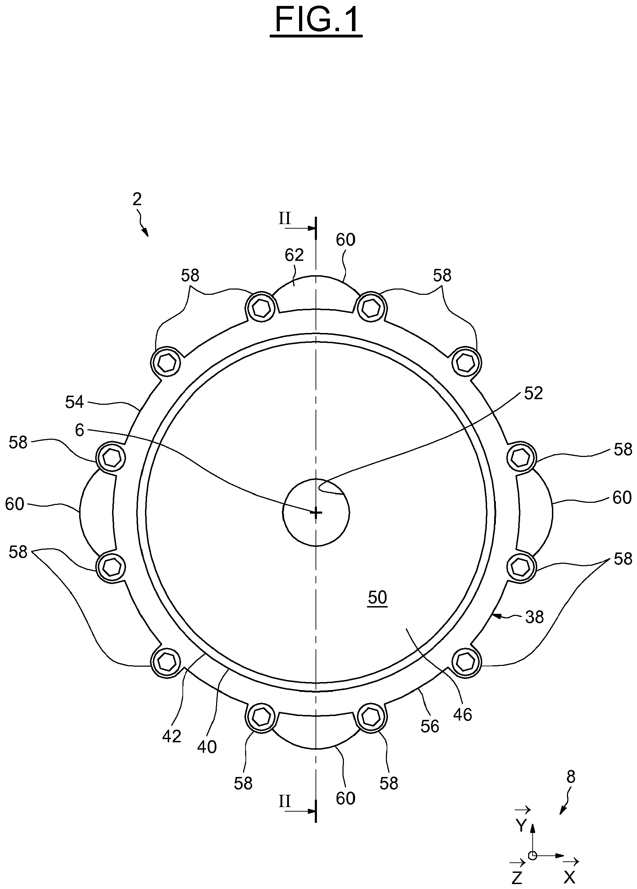

En référence aux figures 1 à 3, on a schématiquement représenté un ensemble statorique 2 destiné à équiper une machine électrique (non représentée). En l'espèce, la machine électrique équipée avec l'ensemble 2 est une machine électrique de traction d'un véhicule automobile à propulsion électrique ou à propulsion hybride électrique.

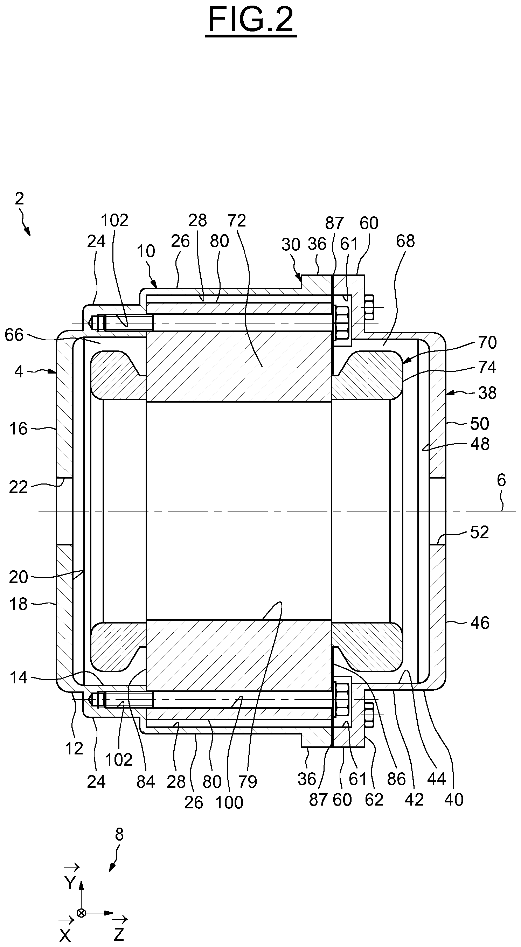

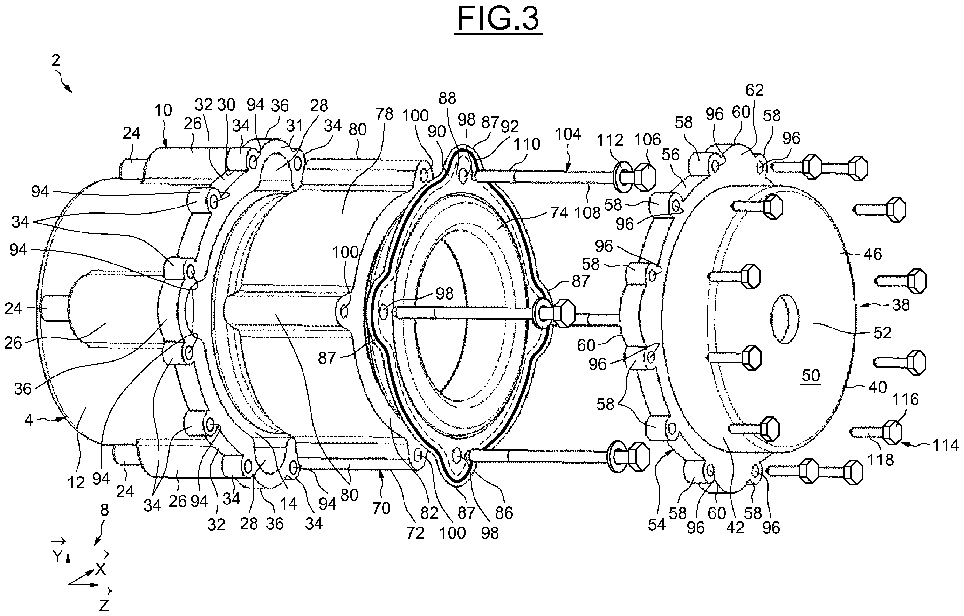

L'ensemble 2 est notamment constitué d'une première portion de boîtier 4, visible sur les figures 2 et 3. La portion 4 est axisymétrique autour d'un axe de symétrie 6. On définit une base vectorielle orthonormale directe 8 attachée à la portion 4. La base 8 est constituée d'un vecteur $\vec{x}$, d'un vecteur $\vec{y}$ et d'un vecteur $\vec{z}$. Le vecteur $\vec{z}$ est parallèle à l'axe 6.

Dans la présente demande, sauf indication contraire, les termes « axial », « axialement », « radial », « radialement » et « tangentiel » seront compris comme se rapportant à l'axe 6. Par ailleurs, le terme « cylindrique » sera compris selon sa définition classique, à savoir qu'une surface cylindrique est une surface constituée par les droites de direction donnée qui rencontrent une courbe donnée.

La première portion 4 comprend un corps principal 10. Le corps 10 est cylindrique à section axiale circulaire autour de l'axe 6. Le corps 10 s'étend radialement entre une surface cylindrique extérieure 12 et une surface cylindrique intérieure 14. Les surfaces 12 et 14 sont cylindrique à section axiale circulaire autour de l'axe 6 et de diamètres respectifs $d_{12}$ et $d_{14}$.

La portion 4 comporte une paroi de fond 16. La paroi 16 s'étend axialement entre une surface axiale extérieure 18 et une surface axiale intérieure 20. Les surfaces 18 et 20 sont planes et perpendiculaire au vecteur $\vec{z}$. Les surfaces 18, 20 prolongent respectivement les surfaces 12, 14. La paroi 16 comporte un alésage 22 traversant. L'alésage 22 est cylindrique à section axiale circulaire autour de l'axe 6 et de diamètre $d_{22}$. L'alésage 22 est prévu pour le passage d'un axe de rotor (non représenté).

La portion 4 comporte quatre excroissances radiales 24 régulièrement réparties sur la circonférence de la surface 12. Les excroissances 24 sont cylindriques par rapport à la direction du vecteur $\vec{z}$. Les excroissances 24 sont sensiblement identiques les unes aux autres.

La portion 4 comporte quatre excroissances radiales 26 régulièrement réparties sur la circonférence de la surface 12. Les excroissances 26 sont situées dans le prolongement axial des excroissances 24. Les excroissances 24 sont axialement situées entre la paroi 16 et les excroissances 26. Les excroissances 26 sont cylindriques par rapport à la direction du vecteur $\vec{z}$. L'épaisseur selon la direction radiale des excroissances 26 est strictement supérieure à l'épaisseur selon la direction radiale des excroissances 24. Les excroissances 26 sont sensiblement identiques les unes aux autres.

La portion 4 comporte quatre rainures rectilignes axiales 28. Les rainures 28 sont cylindriques par rapport à la direction du vecteur $\vec{z}$. Les rainures 28 sont régulièrement réparties sur la circonférence de la surface 14. Les rainures 28 s'étendent radialement vers l'extérieur depuis la surface 14 de sorte à former des gorges intérieures dans la surface 14. Les rainures 28 sont respectivement situées dans le prolongement radial intérieur des excroissances 24 et 26.

La portion 4 comporte une collerette 30 référencée sur la figure 3. La collerette 30 s'étend radialement vers l'extérieur depuis la surface 12. La collerette 30 est cylindrique autour de la direction du vecteur $\vec{z}$. Les excroissances 26 sont axialement situées entre les excroissances 24 et la collerette 30. La collerette 30 est axialement délimitée par une surface axiale extérieure 31 opposée par rapport aux excroissances 26. De cette manière, la portion 4 s'étend axialement entre les surfaces 18 et 31.

Globalement, la collerette 30 est radialement délimitée par une surface cylindrique extérieure 32. La surface 32 est cylindrique à section axiale circulaire autour de l'axe 6 et de diamètre $d_{32}$. Localement, la collerette 30 comporte douze bourrelets radiaux 34. Les bourrelets 34 sont cylindriques autour de la direction du vecteur $\vec{z}$. Les bourrelets 34 sont régulièrement répartis sur la circonférence de la surface 32. Toujours localement, la collerette 30 comporte quatre bourrelets radiaux 36. Les bourrelets 36 sont de plus grande épaisseur que les bourrelets 34. Les bourrelets 36 sont régulièrement répartis sur la circonférence de la surface cylindrique 32. Plus particulièrement, les bourrelets 36 sont situés dans le prolongement axial des excroissances 24 et 26. Ainsi, chaque bourrelet 36 s'étend selon la direction tangentielle entre deux bourrelets 34 adjacents.

En référence aux figure 1 à 3, l'ensemble 2 comporte une deuxième portion de boîtier 38. La portion 38 est axisymétrique autour de l'axe 6. Assemblées, les portions 4 et 38 constituent un boîtier pour la machine électrique.

La portion 38 comprend un corps principal 40 cylindrique autour de l'axe 6. Le corps 40 s'étend radialement entre une surface cylindrique extérieure 42 et une surface cylindrique intérieure 44. Les surfaces 42, 44 sont respectivement cylindriques à section axiale circulaire autour de l'axe 6 et de diamètres respectifs $d_{42}$ et $d_{44}$. Les diamètres $d_{42}$ et $d_{44}$ sont respectivement égaux aux diamètres $d_{12}$ et $d_{14}$ :

$$\begin{cases} d_{12} = d_{42} & \pm 1mm \\ d_{14} = d_{44} & \pm 1mm \end{cases}$$

La portion 38 comporte une paroi de fond 46 s'étendant axialement entre une surface axiale intérieure 48 et une surface axiale extérieure 50. Les surfaces 42, 44 sont respectivement raccordées aux surfaces 50, 48.

La paroi 46 comporte un alésage cylindrique 52 traversant. L'alésage 52 est cylindrique à section axiale circulaire autour de l'axe 6 et de diamètre $d_{52}$ sensiblement égal au diamètre $d_{22}$. Comme l'alésage 22, l'alésage 52 est prévu pour le passage d'un axe de rotor (non représenté).

La portion 38 comporte une collerette 54. La collerette 54 est cylindrique autour de la direction du vecteur $\vec{z}$. Globalement, la collerette 54 est radialement délimitée par une surface cylindrique extérieure 56. La surface 56 est cylindrique à section axiale circulaire autour de l'axe 6 de diamètre $d_{56}$. Le diamètre $d_{56}$ est sensiblement égal au diamètre $d_{32}$. Localement, la collerette 54 comporte douze bourrelets radiaux 58 de relativement petite épaisseur et quatre bourrelets radiaux 60 de relativement grande épaisseur. Les bourrelets 58, 60 sont respectivement situés dans le prolongement axial des bourrelets 36, 34. De la sorte, la collerette 54 est sensiblement identique à la collerette 30.

La collerette 54 s'étend axialement entre une surface frontale proximale 62 et une surface frontale distale 64 (non visible sur les figures). Les surfaces 62 et 64 sont planes et perpendiculaires au vecteur $\vec{z}$. De la sorte, la portion 38 s'étend axialement entre les surfaces 50 et 64. Par ailleurs, les surfaces 64 et 31 forment des trottoirs de couture destinés à venir en appui direct ou indirect l'un par rapport à l'autre afin de former un logement étanche pour un stator logé dans le boîtier.

La portion 38 comporte quatre rainures rectilignes axiales 61, visibles sur la figure 2. Les rainures 61 s'étendent dans le prolongement axial des rainures 28.

La coupe axiale des rainures 61 est sensiblement identique à la coupe axiale des rainures 28.

Ainsi, les rainures 61 s'étendent radialement vers l'intérieur depuis la surface 44 de sorte à former des gorges intérieures dans la surface 44.

Comme illustré sur la figure 2, la portion 4 comprend une cavité 66. La cavité 66 est cylindrique par rapport à la direction du vecteur $\vec{z}$. La cavité 66 s'étend axialement entre les surfaces 20 et 31. La cavité 66 et radialement, extérieurement délimitée par la surface 14 et les surfaces délimitant les rainures 28.

La portion 38 comprend une cavité cylindrique 68. La cavité 68 s'étend axialement entre les surfaces 64 et 48. La cavité 68 est radialement délimitée par la surface 44 et la surface intérieure des rainures 61.

L'ensemble 2 comporte un stator 70. Le stator 70 est notamment constitué d'un corps de stator 72 et d'un enroulement statorique 74.

Le corps de stator 72 est cylindrique et axisymétrique autour de l'axe 6. Globalement, le corps de stator 72 s'étend radialement entre une surface cylindrique extérieure 78 et une surface cylindrique intérieure 79. Les surfaces 78 et 79 sont cylindriques à section axiale circulaire autour de l'axe 6. Le diamètre $d_{78}$ de la section axiale circulaire de la surface 78 est légèrement inférieur au diamètre $d_{14}$.

Localement, le corps de stator 72 comporte quatre nervures 80. Les nervures 80 sont rectilignes selon la direction du vecteur $\vec{z}$. Les nervures 80 sont régulièrement réparties sur la circonférence de la surface 78. Les nervures 80 s'étendent radialement vers l'extérieur depuis la surface 78. Les nervures 80 s'étendent sur toute la longueur axiale du corps de stator 72. Les nervures 80 ont une épaisseur légèrement inférieure à la profondeur des rainures 28.

Le corps de stator 72 s'étend axialement entre une surface frontale 82 et une surface frontale 84. Les surfaces 82 et 84 sont planes et perpendiculaires au vecteur $\vec{z}$.

L'ensemble 2 comporte un joint annulaire 86. Le joint 86 est cylindrique et axisymétrique autour de l'axe 6. Le joint 86 a pour fonctions d'assurer une étanchéité des cavités 66 et 68 par rapport à l'extérieur du boîtier et de participer à la raideur de la liaison d'encastrement entre les éléments 4, 38 et 72.

Le joint 86 est réalisé en tôle d'acier à haute limite élastique. Par exemple, le joint 86 peut être réalisé dans les aciers définis dans le tableau suivant :

| Norme européenne EN 10027 | Norme Afnor NF A 35573 | Norme Américaine AISI |
|---|---|---|
| X6Cr17 1.4016 | Z8C17 | 430 |
| X12CrMoS17 | Z10CF17 | 430 F |
| X5CrNi18-10 1.4301 | Z7CN18-09 | 304 |
| X5CrNiMo18-10 1.4401 | Z6CND17-11 | 316 |

Le joint 86 est sensiblement plan et perpendiculaire au vecteur $\vec{z}$. Le joint 86 est radialement délimité par une surface cylindrique intérieure (non référencée) à section axiale circulaire autour de l'axe 6 et de diamètre $d_{86i}$. Globalement, le joint 86 est radialement délimité par une surface cylindrique extérieure (non référencée) à section axiale circulaire autour de l'axe 6 et de diamètre $d_{86e}$. Le diamètre $d_{86i}$ est strictement inférieur au diamètre $d_{78}$. Le diamètre $d_{86e}$ est strictement supérieur au diamètre $d_{14}$ et de préférence légèrement inférieur au diamètre $d_{12}$. Plus précisément, dans l'exemple illustré :

$$d_{86i} = \frac{9}{10} . d_{78} \qquad \pm 1\%$$

$$d_{86e} = \frac{d_{14} + 9.d_{12}}{10} \quad \pm 1\%$$

Localement, le joint 86 se prolonge radialement par quatre oreilles 87. Les oreilles 87 sont régulièrement réparties sur la circonférence de la surface extérieure du joint 86. Les oreilles 87 ont une épaisseur radiale sensiblement égale à l'épaisseur radiale des bourrelets 36.

Le joint 86 est divisé en une partie radiale interne 88 et une partie radiale externe 90. La limite entre les parties 88 et 90 correspond à la projection axiale du corps de stator 72 sur la surface plane du joint 86. En d'autres mots, la partie 88 comprend la portion située entre les deux cylindres de révolution autour de l'axe 6 de diamètres $d_{86i}$ et $d_{78}$. En outre, la partie 88 comprend les quatre portions du joint 86 respectivement situées dans le prolongement axial des quatre nervures 80. La partie 90 correspond au reste du joint 86.

Les parties 88 et 90 admettent respectivement des plans de symétrie $P_{symétrie\_88}$ et $P_{symétrie\_90}$ (non représentés). Les plans $P_{symétrie\_88}$ et $P_{symétrie\_90}$ sont perpendiculaires au vecteur $\vec{z}$ et situés au milieu de l'épaisseur axiale des parties 88 et 90. Dans le premier mode de réalisation, les plans $P_{symétrie\_88}$ et $P_{symétrie\_90}$ sont confondus. Le joint 86 est d'épaisseur comprise entre 0,25 mm et 0,8 mm.

Sur l'une de ses surfaces axiales, le joint 86 comporte une nervure 92. La nervure 92 s'étend sur toute la circonférence de la surface axiale du joint 86. La nervure 92 est pratiquée sur la partie radiale extérieure 90. En projection radiale, la nervure 92 se situe à une distance $l_{92}$ de la limite radiale extérieure du joint 86, la distance $l_{92}$ étant constante. En d'autres termes, la nervure 92 forme globalement un cercle autour de l'axe 6 de diamètre $d_{92}$ supérieures à $d_{14}$. Localement, la nervure 92 s'écarte de l'axe 6 par rapport à ce cercle, l'écartement variant entre zéro et une valeur maximale légèrement supérieure à la profondeur radiale de la rainure 28. De la sorte, la nervure 92 peut être intégralement en contact avec la surface 64 ou avec la surface 31, selon l'orientation du joint 86.

En référence à la figure 3, la portion 4 comporte 12 perçages axiaux 94. Les perçages 94 sont borgnes. Les perçages 94 sont cylindriques à section circulaire autour d'un axe parallèle au vecteur $\vec{z}$ et de diamètre $d_{94}$. Les perçages 94 comportent un taraudage. Les douze perçages 94 sont respectivement pratiqués dans les douze bourrelets 34.

La portion 38 comporte douze perçages axiaux 96. Les perçages 96 sont cylindriques à section axiale circulaire autour d'un axe parallèle au vecteur $\vec{z}$ et de diamètre $d_{96}$. Les perçages 96 sont traversants et comportent un taraudage identique au taraudage des perçages 94. Les douze perçages 96 sont respectivement pratiqués dans les douze bourrelets 58. Les diamètres $d_{94}$ et $d_{96}$ sont sensiblement égaux :

$$d_{94} = d_{96} \quad \pm 1\%$$

Le joint 86 comportent quatre orifices axiaux 98. Les orifices 98 sont cylindriques à section axiale circulaire autour d'un axe parallèle au vecteur $\vec{z}$ et de diamètre $d_{98}$. Les orifices 98 sont situés dans le prolongement radial intérieur des oreilles 87.

Le corps de stator 72 comporte quatre orifices axiaux 100. Les orifices axiaux 100 sont cylindriques à section axiale circulaire autour d'un axe parallèle au vecteur $\vec{z}$ et de diamètre $d_{100}$. Les quatre orifices 100 sont respectivement pratiqués sur les quatre nervures 80.

En référence à la figure 2, la portion 4 comporte quatre orifices axiaux 102. Les orifices 102 sont borgnes et comportent un taraudage. Les orifices 102 sont cylindriques à section axiale circulaire autour d'un axe parallèle au vecteur $\vec{z}$ et de diamètre $d_{102}$. Les quatre orifices 102 sont respectivement pratiqués dans les quatre excroissances 24. Les diamètres $d_{98}$, $d_{100}$ et $d_{102}$ sont sensiblement égaux.

En référence à la figure 3, l'ensemble 2 comporte quatre broches filetées 104. Chaque broche 104 comprend une tête 106, une partie non filetée 108 et une partie filetée 110. La partie 108 est axialement située entre la tête 106 et la partie 110. Les parties 108 et 110 sont cylindriques à section axiale circulaire de diamètre $d_{104}$ légèrement inférieur au diamètre $d_{98}$. Le filetage de la partie 110 est adapté pour coopérer avec le taraudage des orifices 102.

Quatre rondelles 112 sont respectivement associées aux quatre broches 104. Le diamètre intérieur $d_{112i}$ des rondelles 112 est légèrement supérieur au diamètre $d_{104}$. Le rayon extérieur $r_{112e}$ des rondelles 112 est strictement inférieur à la distance minimale entre l'axe d'un orifice 98 et la nervure 92.

Les rondelles 112 sont de préférence réalisées en un matériau amagnétique. Par exemple, un acier tel que désigné par le tableau ci-dessous peut être utilisé pour constituer les rondelles 112 :

| Norme européenne | Norme Afnor | Norme Américaine |
| --- | --- | --- |
| EN 10027 | NF A 35573 | AISI |
| X5CrNi18-10 1.4301 | Z7CN18-09 | 304 |

L'ensemble 2 comporte douze vis 114. Chaque vis 114 est constituée d'une tête 116 et d'une tige filetée 118. Le diamètre $d_{118}$ et le filetage de la tige 118 sont adaptés pour coopérer avec les diamètres $d_{96}$ et $d_{94}$ et les taraudages des perçages 96 et 94.

L'assemblage de l'ensemble 2 peut être mis en œuvre de la manière suivante.

Dans un premier temps, on introduit le stator 70 dans la cavité 66. Plus précisément, le corps de stator 72 est intégralement logé dans la cavité 66 tandis qu'une partie de l'enroulement 74 dépasse axialement à l'extérieur de la cavité 66. Les nervures 80 sont reçues dans les rainures 28.

Ensuite, on dispose le joint 86 contre la surface 82. Dans cette configuration, la partie 88 est en appui axial contre la surface 82 et la partie 90 est en appui axial contre la surface 31.

Ensuite, l'on insère et l'on pivote les broches 104 dans les orifices 98, 100 et 102. Ce faisant, on fait coopérer le filetage de la partie 110 avec le taraudage de l'orifice 102. Lorsque les broches 104 sont serrées, les éléments 4, 70 et 86 forment un ensemble solidaire.

Dans ce mode de mise en œuvre, le joint 86 est disposé dans sa position telle qu'illustrée sur la figure 3, c'est-à-dire avec la nervure 92 opposée aux éléments 4 et 72.

On peut bien entendu sans sortir du cadre de l'invention disposer le joint 86 dans une position dans laquelle la nervure 92 est adjacente aux éléments 4 et 72.

Dans ce cas, la nervure 92 est pressée axialement contre la surface 31.

On dispose alors la portion 38 au contact de la portion 4 de telle sorte que les surfaces 31 et 64 soient axialement en regard l'une de l'autre. Plus particulièrement, on oriente la portion 38 par rapport à la portion 4 de telle sorte que des bourrelets 60 se situent en regard des bourrelets 36.

Dans cette configuration, la surface 64 est en contact direct avec la nervure 92.

Ensuite, on serre les vis 114. Ce faisant, on fait coopérer le filetage des tiges 118 avec le taraudage des perçages 96 et 94. Lorsque les vis 114 sont serrées, les éléments 4, 70, 86 et 38 forment un ensemble solidaire. La surface 64 comprime axialement la nervure 92 de manière à réaliser une étanchéité entre un espace intérieur et un espace extérieur du boîtier. Le joint 86 est comprimé entre les trottoirs de couture 31 et 64 et en appui axial contre le corps de stator 72. La fixation du corps de stator 72 au moyen des broches 104 et la réalisation du joint 86 en tôle d'acier à haute limite élastique et faible épaisseur permettent d'augmenter la raideur de la liaison d'encastrement entre le corps de stator 72 et le boîtier.

Bien que, dans l'exemple illustré sur les figures 1 à 3, l'ensemble 2 comporte quatre sous-ensembles comprenant chacun une excroissance 24, une excroissance 26, un bourrelet 36, une oreille 87, un bourrelet 60, un orifice 98, un orifice 100, un orifice 102, une rondelle 112 et une broche 104, il est bien entendu possible, sans sortir du cadre de l'invention, de choisir un nombre différent de ces sous-ensembles. De même, il est possible, sans sortir du cadre de l'invention, de choisir un autre nombre de sous-ensembles comprenant chacun un bourrelet 34, un bourrelet 58, un perçage 94, un perçage 96 et une vis 114. Il est aussi possible, sans sortir du cadre de l'invention, de choisir un nombre différent de sous-ensembles comprenant chacun une nervure 80 et une rainure 28.

Bien que, dans l'exemple illustré sur les figures 1 à 3, seul l'orifice 102 comporte un taraudage, on peut bien entendu, sans sortir du cadre de l'invention, tarauder l'un des orifices 98 et 100. De même, le perçage 96 peut être prévu sans taraudage.

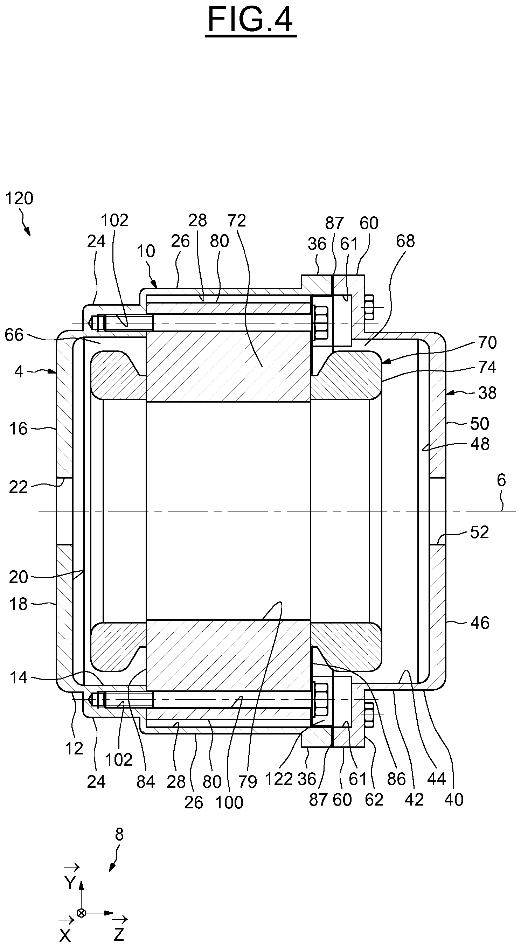

En référence à la figure 4, on a schématiquement représenté un ensemble statorique 120 selon un second mode de réalisation de l'invention. Les mêmes éléments portent les mêmes références.

Le corps de stator 72 de l'ensemble 120 présente une longueur axiale plus faible que la longueur axiale du corps principale 10 de la première portion 4 de boîtier de l'ensemble 2. La partie radiale intérieure 88 est axialement décalée par rapport à la partie radiale extérieure 90. Le décalage axial $\Delta$ entre les plans $P_{symétrie\_88}$ et $P_{symétrie\_90}$ est sensiblement égal au décalage entre les surfaces 31 et 82 lorsque le corps de stator 72 est installé au fond de la cavité 66. De préférence, le décalage $\Delta$ est strictement inférieur à 3 mm.

Dans ce mode de réalisation, le joint 86 comprend, en plus des parties 88 et 90, une partie cylindrique 122. La partie 122 est cylindrique par rapport à la direction du vecteur $\vec{z}$. La section axiale de la partie 122 correspond à la projection axiale du corps de stator 72. L'épaisseur axiale de la partie 122 égale sensiblement le décalage $\Delta$.

Grâce à cet agencement, il est possible, dans ce mode de réalisation, de réaliser l'étanchéité entre l'espace intérieur et l'espace extérieur du boîtier, et d'augmenter la raideur de la liaison d'encastrement même si le corps de stator 72 est moins long axialement que la portion 4.

Dans le second mode de réalisation, le joint 86 est adapté pour tenir compte d'une réduction de la longueur axiale du corps de stator 72. Toutefois, on peut bien entendu sans sortir du cadre de l'invention envisager d'adapter le joint 86 pour tenir compte d'une augmentation de la longueur axiale du corps de stator 72.

En réalisant une étanchéité entre l'intérieur et l'extérieur du boîtier, on facilite l'aspiration de fluide hydraulique. Il en résulte que le déjaugeage du point d'aspiration est moins sensible aux pentes du fait du moindre déplacement de fluide hydraulique. En augmentant la raideur de la liaison d'encastrement entre le boîtier et le corps de stator, on absorbe efficacement les vibrations pouvant apparaître dans cette liaison, de sorte que la fiabilité vibratoire et acoustique de l'ensemble statorique selon l'invention est améliorée.

**Revendications**

1. Ensemble statorique (2, 120) pour machine électrique comprenant une première portion de boîtier (4), une seconde portion de boîtier (38), un corps de stator (72) inséré dans au moins la première portion de boîtier (4), un moyen de liaison (80, 28) pour lier en rotation le corps de stator (72) avec la première portion de boîtier (4), un premier moyen de fixation (104) du corps de stator (72) à la première portion de boîtier (4), et un deuxième moyen de fixation (114) pour fixer les portions de boîtier (4, 38) l'une par rapport à l'autre, **caractérisé en ce qu'**il comprend un joint annulaire (86) axialement intercalé d'une part entre le corps de stator (72) et le premier moyen de fixation et d'autre part entre lesdites première et deuxième portions de boîtier (4, 38).

2. Ensemble (2, 120) selon la revendication 1, dans lequel le joint annulaire (86) comprend une partie radiale interne (88) axialement intercalée entre le corps de stator (72) et le premier moyen de fixation, et une partie radiale externe (90) axialement intercalée entre les portions de boîtier (4, 38).

3. Ensemble (2, 120) selon la revendication 2, dans lequel la partie radiale interne (88) admet un plan de symétrie perpendiculaire à la direction axiale (z), la partie radiale externe (90) admettant un plan de symétrie perpendiculaire à la direction axiale (z), le décalage axial entre le plan de symétrie de la partie radiale interne (88) et le plan de symétrie de la partie radiale externe (90) étant inférieur à 3 mm, ledit joint annulaire étant au moins partiellement réalisé en tôle d'acier à haute limite élastique.

4. Ensemble (2, 120) selon la revendication 2 ou 3, dans lequel la partie radiale interne (88) et/ou la partie radiale externe (90) a une épaisseur axiale comprise entre 0,25 mm et 0,8 mm.

5. Ensemble (2, 120) selon l'une quelconque des revendications 1 à 4, dans lequel la première portion de boîtier (4) comprend une cavité cylindrique (66), le corps de stator (72) étant inséré dans la cavité cylindrique (66), le moyen de liaison comprenant une nervure rectiligne axiale (80) dépassant radialement vers l'extérieur depuis le corps de stator (72), et une rainure rectiligne axiale (28) pratiquée dans la première portion de boîtier (4) et s'étendant radialement vers l'extérieur depuis la cavité cylindrique (66), la nervure (80) étant logée dans la rainure (28).

6. Ensemble (2, 120) selon la revendication 5, comprenant un premier orifice (98) axial débouchant pratiqué dans le joint annulaire (86), un deuxième orifice (100) axial débouchant pratiqué dans la nervure (80) et un troisième orifice (102) axial pratiqué dans la première portion de boîtier (4) dans le prolongement axial de la rainure (28), le troisième orifice (102) comprenant un taraudage, l'ensemble comprenant une broche filetée (104) traversant le premier orifice (98), le deuxième orifice (100) et coopérant avec le taraudage du troisième orifice (102).

7. Ensemble (2, 120) selon la revendication 6, comprenant une rondelle (112) associée à la broche (104), la broche (104) comprenant une tête (106), la rondelle (112) étant axialement intercalée entre le corps de stator (72) et la tête (106).

8. Ensemble (2, 120) selon l'une quelconque des revendications 5 à 7, dans lequel le deuxième moyen de fixation comprend un premier perçage (96) axial débouchant pratiqué dans la seconde portion de boîtier (38), un second perçage (94) axial pratiqué dans la première portion de boîtier (4), et une vis (114), le second perçage (94) comprenant un taraudage, la vis (114) traversant le premier perçage (96) et coopérant avec le taraudage du second perçage (94).

9. Machine électrique pour véhicule automobile comprenant un ensemble statorique (2, 120) selon l'une quelconque des revendications 1 à 8.


**Patentansprüche**

1. Statoranordnung (2, 120) für eine elektrische Maschine, die einen ersten Gehäuseabschnitt (4), einen zweiten Gehäuseabschnitt (38), einen in wenigstens den ersten Gehäuseabschnitt (4) eingesetzten Statorkörper (72), ein Verbindungsmittel (80, 28) zum drehfesten Verbinden des Statorkörpers (72) mit dem ersten Gehäuseabschnitt (4), ein erstes Mittel zur Befestigung (104) des Statorkörpers (72) am ersten Gehäuseabschnitt (4) und ein zweites Befestigungsmittel (114) zum Befestigen der Gehäuseabschnitte (4, 38) aneinander umfasst, **dadurch gekennzeichnet, dass** sie eine Ringdichtung (86) umfasst, die axial einerseits zwischen dem Statorkörper (72) und dem ersten Befestigungsmittel und andererseits zwischen dem ersten und dem zweiten Gehäuseabschnitt (4, 38) angeordnet ist.

2. Anordnung (2, 120) nach Anspruch 1, wobei die Ringdichtung (86) einen radial inneren Teil (88), der axial zwischen dem Statorkörper (72) und dem ersten Befestigungsmittel angeordnet ist, und einen radial äußeren Teil (90), der axial zwischen den Gehäuseabschnitten (4, 38) angeordnet ist, umfasst.

3. Anordnung (2, 120) nach Anspruch 2, wobei der radial innere Teil (88) eine Symmetrieebene aufweist, die zur axialen Richtung ($\vec{z}$) senkrecht ist, und der radial äußere Teil (90) eine Symmetrieebene aufweist, die zur axialen Richtung ($\vec{z}$) senkrecht ist, wobei der axiale Versatz zwischen der Symmetrieebene des radial inneren Teils (88) und der Symmetrieebene des radial äußeren Teils (90) kleiner als 3 mm ist, wobei die Ringdichtung wenigstens teilweise aus Stahlblech mit hoher Elastizitätsgrenze hergestellt ist.

4. Anordnung (2, 120) nach Anspruch 2 oder 3, wobei der radial innere Teil (88) und/oder der radial äußere Teil (90) eine axiale Dicke zwischen 0,25 mm und 0,8 mm aufweisen.

5. Anordnung (2, 120) nach einem der Ansprüche 1 bis 4, wobei der erste Gehäuseabschnitt (4) einen zylindrischen Hohlraum (66) umfasst, wobei der Statorkörper (72) in den zylindrischen Hohlraum (66) eingesetzt ist, wobei das Verbindungsmittel eine gerade axiale Rippe (80), die vom Statorkörper (72) radial nach außen vorsteht, und eine gerade axiale Rille (28), die im ersten Gehäuseabschnitt (4) ausgebildet ist und sich von dem zylindrischen Hohlraum (66) aus radial nach außen erstreckt, umfasst, wobei die Rippe (80) in der Rille (28) aufgenommen ist.

6. Anordnung (2, 120) nach Anspruch 5, welche eine erste axiale Durchgangsöffnung (98), die in der Ringdichtung (86) ausgebildet ist, eine zweite axiale Durchgangsöffnung (100), die in der Rippe (80) ausgebildet ist, und eine dritte axiale Öffnung (102), die im ersten Gehäuseabschnitt (4) in der axialen Verlängerung der Rille (28) ausgebildet ist, umfasst, wobei die dritte Öffnung (102) ein Innengewinde umfasst, wobei die Anordnung eine Gewindespindel (104) umfasst, welche die erste Öffnung (98) und die zweite Öffnung (100) durchquert und mit dem Innengewinde der dritten Öffnung (102) zusammenwirkt.

7. Anordnung (2, 120) nach Anspruch 6, welche eine mit der Spindel (104) verbundene runde Scheibe (112) umfasst, wobei die Spindel (104) einen Kopf (106) umfasst, wobei die runde Scheibe (112) axial zwischen dem Statorkörper (72) und dem Kopf (106) angeordnet ist.

8. Anordnung (2, 120) nach einem der Ansprüche 5 bis 7, wobei das zweite Befestigungsmittel eine erste axiale Durchgangsbohrung (96), die im zweiten Gehäuseabschnitt (38) ausgebildet ist, eine zweite axiale Bohrung (94), die im ersten Gehäuseabschnitt (4) ausgebildet ist, und eine Schraube (114) umfasst, wobei die zweite Bohrung (94) ein Innengewinde umfasst, wobei die Schraube (114) die erste Bohrung (96) durchquert und mit dem Innengewinde der zweiten Bohrung (94) zusammenwirkt.

9. Elektrische Maschine für ein Kraftfahrzeug, welche eine Statoranordnung (2, 120) nach einem der Ansprüche 1 bis 8 umfasst.

## Claims

1. Stator assembly (2, 120) for an electric machine, comprising a first housing portion (4), a second housing portion (38), a stator body (72) inserted into at least the first housing portion (4), a linking means (80, 28) for linking in rotation the stator body (72) with the first housing portion (4), a first fastening means (104) for fastening the stator body (72) to the first housing portion (4), and a second fastening means (114) for fastening the housing portions (4, 38) to one another, **characterized in that** it comprises an annular seal (86) axially interposed both between the stator body (72) and the first fastening means and between said first and second housing portions (4, 38).

2. Assembly (2, 120) according to Claim 1, in which the annular seal (86) comprises an inner radial part (88) that is axially interposed between the stator body (72) and the first fastening means, and an outer radial part (90) that is axially interposed between the housing portions (4, 38).

3. Assembly (2, 120) according to Claim 2, in which the inner radial part (88) has a plane of symmetry perpendicular to the axial direction ($\vec{z}$), the outer radial part (90) having a plane of symmetry perpendicular to the axial direction ($\vec{z}$), the axial offset between the plane of symmetry of the inner radial part (88) and the plane of symmetry of the outer radial part (90) being less than 3 mm, said annular seal being at least partially made of steel sheet with a high elastic limit.

4. Assembly (2, 120) according to Claim 2 or 3, in which the inner radial part (88) and/or the outer radial part (90) has an axial thickness of between 0.25 mm and 0.8 mm.

5. Assembly (2, 120) according to any one of Claims 1 to 4, in which the first housing portion (4) comprises a cylindrical cavity (66), the stator body (72) being inserted into the cylindrical cavity (66), the linking means comprising an axial rectilinear rib (80) projecting radially outwards from the stator body (72), and an axial rectilinear slot (28) formed in the first housing portion (4) and extending radially outwards from the cylindrical cavity (66), the rib (80) being housed in the slot (28).

6. Assembly (2, 120) according to Claim 5, comprising a first axial through-orifice (98) formed in the annular seal (86), a second axial through-orifice (100) formed in the rib (80) and a third axial orifice (102) formed in the first housing portion (4) in the axial extension of the slot (28), the third orifice (102) comprising a tapping, the assembly comprising a threaded pin (104) passing through the first orifice (98) and the second orifice (100) and cooperating with the tapping of the third orifice (102).

**7.** Assembly (2, 120) according to Claim 6, comprising a washer (112) associated with the pin (104), the pin (104) comprising a head (106), the washer (112) being axially interposed between the stator body (72) and the head (106).

**8.** Assembly (2, 120) according to any one of Claims 5 to 7, in which the second fastening means comprises a first axial through-hole (96) formed in the second housing portion (38), a second axial hole (94) formed in the first housing portion (4), and a screw (114), the second hole (94) comprising a tapping, the screw (114) passing through the first hole (96) and cooperating with the tapping of the second hole (94).

**9.** Electric machine for a motor vehicle, comprising a stator assembly (2, 120) according to any one of Claims 1 to 8.

# FIG.1

# FIG.2

FIG.3

# FIG.4

## RÉFÉRENCES CITÉES DANS LA DESCRIPTION

**Documents brevets cités dans la description**

- JP S649435 B
- JP 2007306751 A
- JP 64009435 U
- DE 102009000010 A